# EUROPEAN PATENT APPLICATION

(11) **EP 2 198 694 A2**
(43) Date of publication of application: **23.06.2010**
(21) Application number: 09179227.5
(22) Date of filing: 15.12.2009
(51) Int. Cl.: A01G 9/02

(54) **Modular plant growing device**

(30) Priority: 16.12.2008 TW 97222538 U
(71) Applicant: MA Ke-Ten, Taoyuan County 33751 (TW)
(72) Inventor: MA Ke-Ten, Taoyuan County 33751 (TW)
(74) Representative: Anderson, James Edward George

(57) **Abstract**

A modular plant growing device (100) includes a main frame (1) mounted on an upright supporting surface (200). The main frame (1) is configured with an accommodating space (15) defined by an upright rear plate (11), an inclined top plate (12) extending gradually and upwardly from an upper end (111) of the rear plate (11), an inclined bottom plate (13) extending gradually and upwardly from a lower end (112) of the rear plate (11), and opposite lateral plates (14) for receiving a plant unit. The top plate (11) is formed with an inlet unit permitting flow of liquid for plant growth into the accommodating space (15) therethrough. The bottom plate (13) is formed with an outlet unit disposed adjacent to the lower end (112) of the rear plate (11) and permitting leakage of the liquid from the accommodating space (15) therethrough.

## Description

The invention relates to a plant growing device, more particularly to a modular plant growing device.

To beautify an environment, many potted plants may be mounted and arranged on a wall surface to form a plant growing wall. A conduit system for watering is provided for the plant growing wall. However, in such a plant growing wall, during watering, water is directly watered to the soil of each plotted plant via the conduit system such that the soil is easily washed away from the potted plants, thereby resulting in blockage of the conduit system. As such, once the conduit system is blocked, overflowed water from the conduit system may pollute the environment.

Therefore, an object of the present invention is to provide a modular plant growing device that can overcome the aforesaid drawbacks of the prior art.

According to the present invention, a modular plant growing device comprises a main frame adapted to be mounted on an upright supporting surface. The main frame includes an upright rear plate having upper and lower ends, an inclined top plate extending gradually and upwardly from the upper end of the rear plate, an inclined bottom plate extending gradually and upwardly from the lower end of the rear plate, and opposite lateral plates each connected among the rear plate, the top plate and the bottom plate, the rear plate cooperating with the top and bottom plates, and the lateral plates to define an accommodating space thereamong adapted for receiving a plant unit. The top plate is formed with an inlet unit adapted for permitting flow of liquid for plant growth into the accommodating space therethrough. The bottom plate is formed with an outlet unit disposed adjacent to the lower end of the rear plate and adapted for permitting leakage of the liquid from the accommodating space therethrough.

Other features and advantages of the present invention will become apparent in the following detailed description of the preferred embodiments with reference to the accompanying drawings, of which:
Figure 1 is a perspective view showing one arrangement of the first preferred embodiment of a modular plant growing device according to the present invention;
Figure 2 is a schematic sectional view showing the first preferred embodiment;
Figure 3 is an exploded perspective view showing a container, a pot-mounting seat and a liquid dispenser of the first preferred embodiment;
Figure 4 is an exploded, schematic side view showing the container and the pot-mounting seat of the first preferred embodiment;
Figure 5 is a schematic sectional view showing the container taken along V-V line in Figure 3;
Figure 6 is a partly exploded view of the first preferred embodiment illustrating how a main frame is mounted on an upright supporting surface; and
Figure 7 is a perspective view showing the second preferred embodiment of a modular plant growing device according to the present invention.

Before the present invention is described in greater detail, it should be noted that like elements are denoted by the same reference numerals throughout the disclosure.

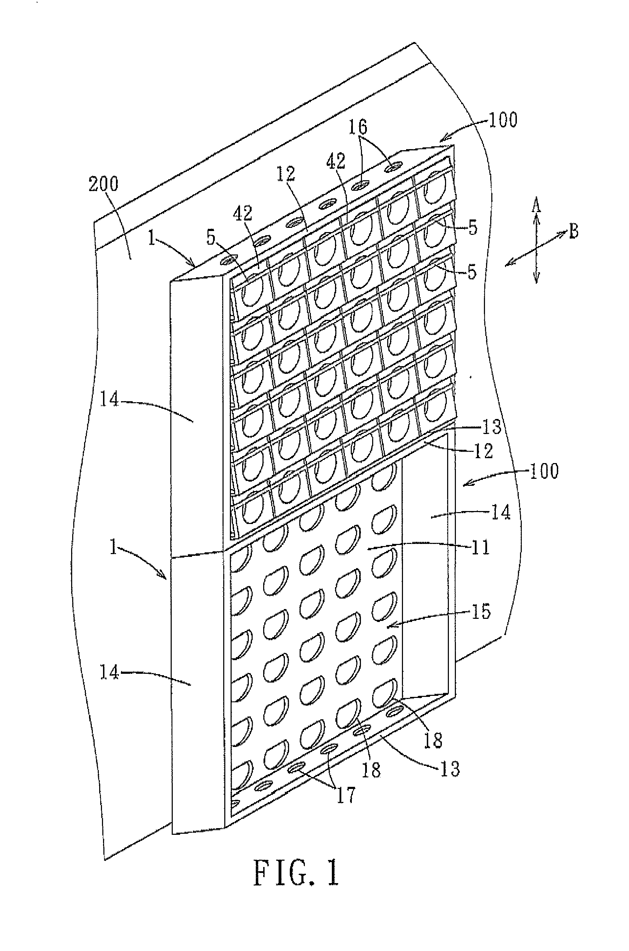

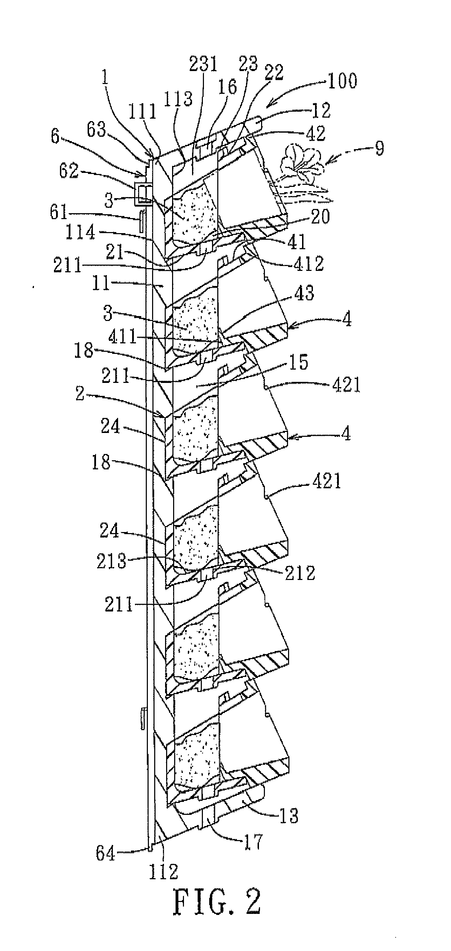

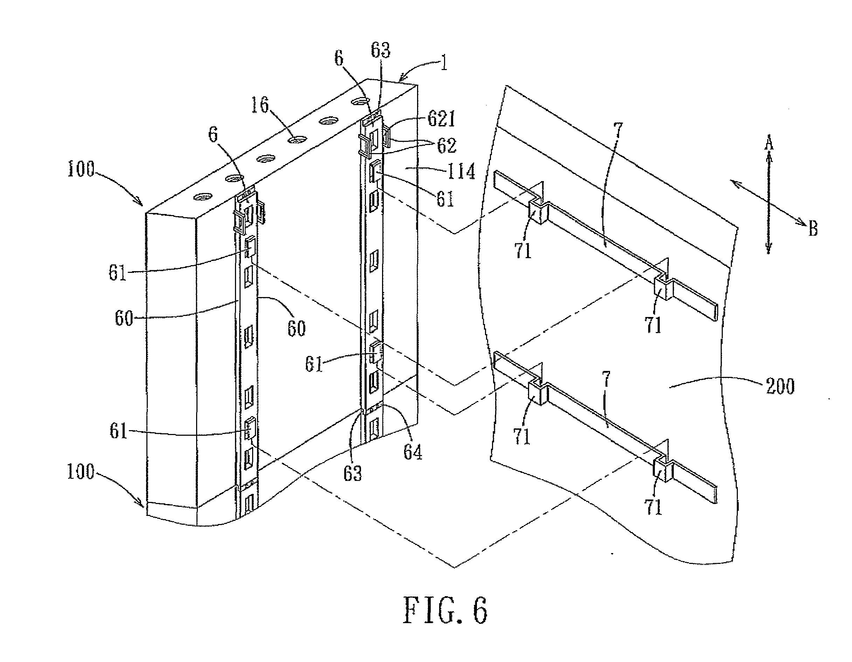

Referring to Figure 1, an assembly of modular plant growing devices 100 of the first preferred embodiment according to the present invention is shown to be mounted on an upright supporting surface 200, such as a wall surface, wherein two modular plant growing devices 100 are stacked on each other in a longitudinal direction (A). In this embodiment, referring further to Figures 2 and 6, each modular plant growing device 100 includes a main frame 1, a plurality of containers 2, a plurality of pot-mounting seats 4, a plurality of liquid dispensers 3, and a hanging unit.

The following is the detailed description of each modular plant growing device 100.

The main frame 1 is adapted to be mounted on the supporting surface 200, and includes an upright rear plate 11, an inclined top plate 12, an inclined bottom plate 13, and opposite lateral plates 14. The rear plate 11 has upper and lower ends 111, 112. The inclined top plate 12 extends gradually and upwardly from the upper end 111 of the rear plate 11. The inclined bottom plate 13 extends gradually and upwardly from the lower end 112 of the rear plate 11. Each lateral plate 14 is connected among the rear plate 11, the top plate 12 and the bottom plate 13. The rear plate 11 cooperates with the top and bottom plates 12, 13, and the lateral plates 14 to define an accommodating space 15 thereamong adapted for receiving a plant unit. The rear plate 11 of the main frame 1 has an outer surface 114, and an inner surface 113 formed with a plurality of engaging grooves 18 that are arranged in a 6 x 6 array in this embodiment. The top plate 12 is formed with an inlet unit adapted for permitting flow of liquid for plant growth, such as water, into the accommodating space 15 therethrough. In this embodiment, the inlet unit includes six inlet holes 16. The bottom plate 13 is formed with an outlet unit disposed adjacent to the lower end 112 of the rear plate 11 and adapted for permitting leakage of the liquid from the accommodating space 15 therethrough. In this embodiment, the outlet unit includes six outlet holes 17 that are aligned respectively with the inlet holes 16 in the top plate 12. As a result, for an upper modular plant growing device 100, leakage of the liquid from the accommodating space 15 through the outlet holes 17 can flow into the accommodating space 15 in a lower modular plant growing device 100 through the inlet holes in the lower modular plant growing device 100.

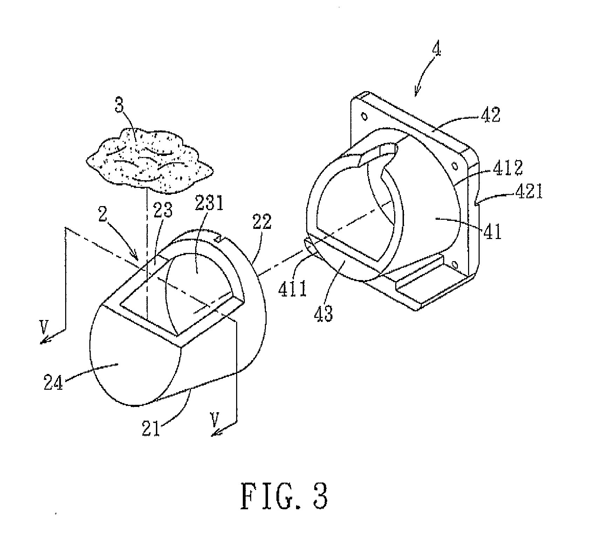

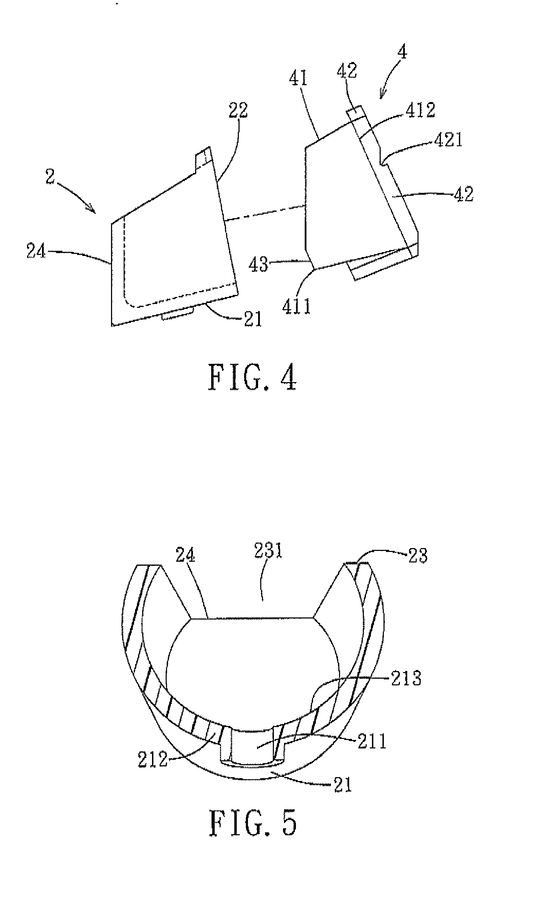

Referring further to Figures 3 to 5, the containers 2 are disposed in the accommodating space 15 in the main frame 1. Each container 2 is configured with an inner receiving space 20 (see Figure 2), has a rear side 24 engaging a corresponding engaging groove 18 in the inner surface 113 of the rear plate 11 of the main frame 1, as best shown in Figure 2, a front open end 22 in spatial communication with the inner receiving space 20, an upper side 23 formed with an opening 231 in spatial communication with the inner receiving space 20, and a lower side 21 having a curved wall 212 that extends gradually and upwardly toward the front open end 22 (see Figure 2), that has a concave inner surface 213 and that is formed with a through hole 211, as best shown in Figure 5. It is noted that, in this embodiment, the openings 231 in the containers 2, which engage respectively the engaging grooves 18 in a first row of the array, correspond respectively to the inlet holes 16 in the top plate 12 of the main frame 1 such that the liquid from each inlet hole 16 in the main frame 1 can flow into the inner receiving space 20 in a corresponding one of the containers 2 engaging respectively the engaging grooves 18 in the first row of the array through the opening 231 in the same. The through holes 211 in the containers 2, which engage respectively the engaging grooves 18 in an i^{th} row of the array, correspond respectively to the openings 231 in the containers 2, which engage respectively the engaging grooves 18 in an (i+1)^{th} row of the array, where 1 ≤ i ≤ 5. The through holes 231 in the containers 2, which engage respectively the engaging grooves 18 in a sixth row of the array, correspond respectively to the outlet holes 17 in the main frame 1.

Each liquid dispenser 3, which is made from a porous material, such as an absorbent sponge material, is disposed in the inner receiving space 20 in a corresponding container 2 and adapted for collecting the liquid, which flows into the accommodating space in the main frame 1 through the inlet holes 16 in the main frame 1, via the opening 231 in the corresponding container 2.

In this embodiment, the plant unit includes a plurality of potted plants 9. The pot-mounting seats 4 are disposed in the accommodating space 15 in the main frame 1, and are mounted respectively to the containers 2. In this embodiment, each pot-mounting seat 4 is disposed partly in the inner receiving space 20 in a corresponding container 2 through the front open side 22, and is adapted for retaining a corresponding potted plant 9 therein so that the liquid dispenser 3 received in the inner receiving space 20 in each container 2 is capable of supplying the liquid collected thereby to the potted plant 9 retained in a corresponding pot-mounting seat 4. In this embodiment, each pot-mounting seat 4 has a tubular body 41 adapted for receiving the corresponding potted plant 9 therein, extending into the inner receiving space 20 in the corresponding container 2 through the front open side 22 of the corresponding container 2, and having a rear end 411 disposed in the inner receiving space 20 in the corresponding container 2 and spaced apart from the through hole 211 in the lower side 21 of the corresponding container 2, and a front end 412 disposed outwardly of the corresponding container 2. As shown in Figures 3 and 4, each pot-mounting seat 4 further has a stop flange 43 extending inwardly and upwardly from the rear end 411 of the tubular body 41, and adapted to abut against the corresponding potted plant 9 when the corresponding potted plant 9 is disposed in the tubular body 41, and a looped flange 42 extending outwardly and radially from the front end 412 of the tubular body 41. The looped flange 42 of each pot-mounting seat 4 is formed with a transverse notch 412 that extends in a transverse direction (B) transverse to the longitudinal direction (A) in this embodiment.

In this embodiment., the modular plant growing device 100 further includes a plurality of resilient fastening strings 5 each having opposite ends fixed respectively to the lateral plates 14 of the main frame 1 and received in the transverse notches 412 in said looped flanges 42 of the six pot-mounting seats 4 mounted respectively to the containers 2 that engage respectively the engaging grooves 18 in a corresponding row of the array, thereby anchoring the pot-mounting seats 4 to the main frame 1.

Referring further to Figure 6, the hanging unit is provided on the main frame 1 and the supporting surface 200 for anchoring detachably the main frame 1 to the supporting surface 200. In this embodiment, the hanging unit includes a pair of elongate first connecting members 6, and a pair of second connecting members 7. The first connecting members 6 extend in the longitudinal direction. (A), and are mounted fixedly and spacedly on the outer surface 114 of the rear plate 11 of the main frame 1. Each first connecting member 6 has two inverted L-shaped hooks 61 arranged in the longitudinal direction (A), an upper end formed with a positioning groove 63, and a lower end formed with a downwardly extending positioning protrusion 64. As a result, when the upper modular plant growing device 100 is stacked on the lower modular plant growing device 100, the positioning protrusions 64 of the first connecting members 6 of the upper modular plant growing device 100 engage respectively the positioning grooves 63 in the first connecting members 6 of the lower modular plant growing device 100. The second connecting members 7 extend in the transverse direction (B), and are adapted to be mounted fixedly and spacedly on the supporting surface 200. Each second connecting members 7 has two hanging rings 71 each engaging releasably a corresponding inverted L-shaped hook 61 of each first connecting member 6. It is noted that each first connecting member 6 further has opposite lateral sides 60, and two lugs 62 disposed adjacent to the upper end, and extending respectively and rearwardly from the lateral sides 60. Each lug 62 of the first connecting members 6 is formed with a through hole 621 adapted for permitting extension of a tool (not shown) therethrough when desiring to move the main frame 1 away from the supporting surface 200.

In such a configuration, for each the upper modular plant growing device 100, leakage of the liquid from the inner receiving space 20 in each of the containers 2 engaging respectively the engaging grooves 18 in the i^{th} row of the array through the through hole 231 in the same upon saturation of the liquid dispenser 3 received in the same can flow into the inner receiving space 20 in a corresponding one of the containers 2 engaging respectively the engaging grooves 18 in the (i+1) ^{th} of the array through the opening 231 in the same and is absorbed by the liquid dispenser 3 disposed in the same. For the upper modular plant growing device 100, leakage of the liquid from the inner receiving space 20 in each of the containers 2 engaging respectively the engaging grooves 18 in the sixth row of the array through the through hole 231 in the same upon saturation of the liquid dispenser 3 received in the same can flow into the accommodating space 15 in the lower modular plant growing device 100 through a corresponding outlet hole 17, and a corresponding inlet hole 16 in the lower modular plant growing device 100.

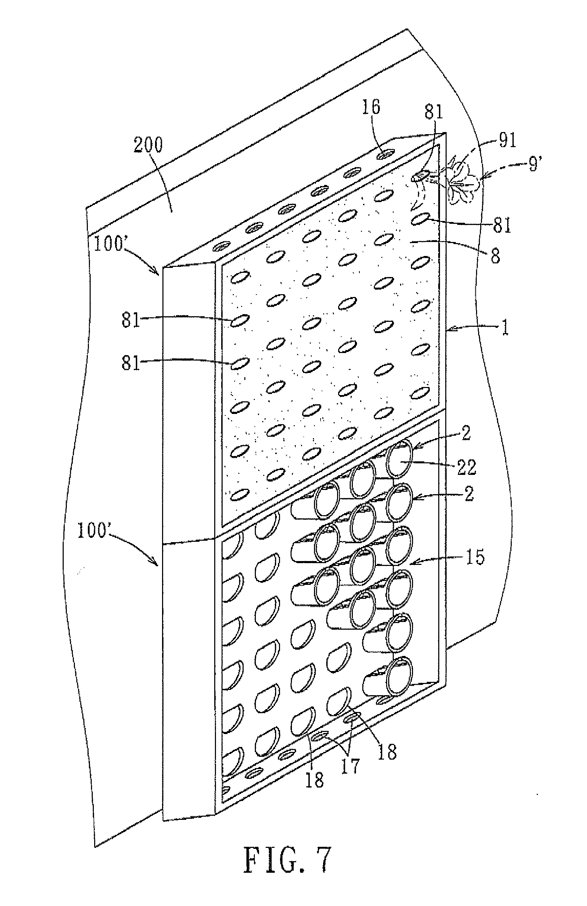

Referring to Figure 7, an assembly of modular plant growing devices 100' of the second preferred embodiment according to this invention is shown. In this embodiment, each modular plant growing device 100' is a modification of the first preferred embodiment. Unlike the previous embodiment, the pot-mounting seats 4 in the first preferred embodiment are omitted in this embodiment and the plant unit includes a plurality of plants 9' each disposed in the inner receiving space 20 in a corresponding container 2, and planted onto the liquid dispenser 3, which is an absorbent sponge and received in the inner receiving space 20 in the corresponding container 2. Furthermore, each modular plant growing device 100' further includes a cover 8 mounted to the main frame 1 for covering the containers 2, and formed with a plurality of openings 81 corresponding respectively to the containers 2 such that the plant 9' disposed in the inner receiving space 20 in each container 2 has a growing portion 91 extending outwardly of the accommodating space 15 in the main frame 1 through the front open side 22 of the same, and a corresponding opening 81 in the cover 8. In this embodiment, the cover 8 is in the form of a curtain, and is made of nonwoven cloth.

In sum, the modular plant growing device 100, 100' of the present invention can be easily assembled and transported. In use, the arrangement of the modular plant growing device 100, 100' may be varied, depending on the size of the supporting surface 200, thereby enhancing applicability. Since the liquid dispensers 3 can effectively collect the liquid and appropriately supply the liquid to the plant unit, which may include a plurality of the potted plants 9, the soil of each potted plant 9 is only minimally washed away. Therefore, blocking of the conduit system as encountered in the prior art can be avoided. Furthermore, due to the presence of the inlet and outlet units, spurting and splashing of water during watering can be minimized.

## Claims

1. A modular plant growing device (100, 100')
**characterized by**:
a main frame (1) adapted to be mounted on an upright supporting surface (200), and including an upright rear plate (11) having upper and lower ends (111, 112), an inclined top plate (12) extending gradually and upwardly from said upper end (111) of said rear plate (11), an inclined bottom plate (13) extending gradually and upwardly from said lower end (112) of said rear plate (11), and opposite lateral plates (14) each connected among said rear plate (11), said top plate (12) and said bottom plate (13), said rear plate (11) cooperating with said top and bottom plates (12, 13), and said lateral plates (14) to define an accommodating space (15) thereamong adapted for receiving a plant unit, said top plate (12) being formed with an inlet unit adapted for permitting flow of liquid for plant growth into said accommodating space (15) therethrough, said bottom plate (13) being formed with an outlet unit disposed adjacent to said lower end (112) of said rear plate (11) and adapted for permitting leakage of the liquid from said accommodating space (15) therethrough.

2. The modular plant growing device (100, 100') as claimed in Claim 1, **characterized in that** said rear plate (11) has an outer surface (114), and an inner surface (113) formed with a plurality of engaging grooves (18), said modular plant growing device (100. 100') further **characterized by**:
a plurality of containers (2) disposed in said accommodating space (15) in said main frame (1), each of said containers (2) being configured with an inner receiving space (20), having a rear side (24) engaging a corresponding one of said engaging grooves (18) in said inner surface (113) of said rear plate (11) of said main frame (1), a front open side (22) in spatial communication with said inner receiving space (20), an upper side (23) formed with an opening (231) in spatial communication with said inner receiving space (20), and a lower side (21) formed with a through hole (211);
a plurality of liquid dispensers (3) each disposed in said inner receiving space (20) in a corresponding one of said containers (2) and adapted for collecting the liquid, which flows into said accommodating space (15) in said main frame (1) through said inlet unit, via said opening (231) in the corresponding one of said containers (2).

3. The modular plant growing device (100, 100') as claimed in Claim 2, further **characterized in that** each of said liquid dispensers (3) includes an absorbent sponge.

4. The modular plant growing device (100') as claimed in Claim 3, the plant unit including plurality of plants (9') each disposed in said inner receiving space (20) in a corresponding one of said containers (2) and planted onto said absorbent sponge received in said inner receiving space (20) in the corresponding one of said containers (2), said modular plant growing device (100') further **characterized by** a cover (8) mounted to said main frame (1) for covering said containers (2), and formed with a plurality of openings (81) corresponding respectively to said containers (2) such that the plant (9') disposed in said inner receiving space (20) in each of said containers (2) has a growing portion (91) extending outwardly of said accommodating space (15) in said main frame (1) through said front open side (22) of a corresponding one of said containers (2), and a corresponding one of said openings (81) in said cover (8).

5. The modular plant growing device (100') as claimed in Claim 4, further **characterized in that** said cover (8) is made of nonwoven cloth.

6. The modular plant growing device (100, 100') as claimed in Claim 2, further **characterized in that** said lower side (21) of each of said containers (2) has a curved wall (212) extending gradually and upwardly toward said front open side (22), formed with said through hole (211), and having a concave inner surface (213).

7. The modular plant growing device (100) as claimed in Claim 6, the plant unit including a plurality of potted plants (9), said modular plant growing device (100) further **characterized by** a plurality of pot-mounting seats (4) disposed in said accommodating space (15) in said main frame (1) and mounted respectively to said containers (2), each of said pot-mounting seat (4) being disposed partly in said inner receiving space (20) in a corresponding one of said containers (2) through said front open side (22), and being adapted for retaining a corresponding one of the potted plants (9) therein so that said liquid dispenser (3) received in said inner receiving space (20) in each of said containers (2) is capable of supplying the liquid collected thereby to the potted plant (9) retained in a corresponding one of said pot-mounting seats (4).

8. The modular plant growing device (100) as claimed in Claim 7, further **characterized in that** each of said pot-mounting seats (4) has:
a tubular body (41) adapted for receiving the corresponding one of the potted plants (9) therein, extending into said inner receiving space (20) in the corresponding one of said containers (2) through said front open side (22) of the corresponding one of said containers (2), and having a rear end (411) disposed in said inner receiving space (20) in the corresponding one of said containers (2) and spacedly apart from said trough hole (211) in said lower side (21) of the corresponding one of said containers (2), and a front end (412) disposed outwardly of the corresponding one of said containers (2) ;
a stop flange (43) extending inwardly and upwardly from said rear end (411) of said tubular body (41), and adapted to abut against the corresponding one of the potted plants (9) when the corresponding one of the potted plants (9) is disposed in said tubular body (41) ; and
a looped flange (42) extending outwardly and radially from said front end (412) of said tubular body (41).

9. The modular plant growing device (100) as claimed in Claim 8, further **characterized in that**:
said engaging grooves (10) in said inner surface (113) of said rear plate (11) of said main frame (1) are arranged in an M x N array;
said inlet unit in said top plate of said main frame includes a number (N) of inlet holes (16) corresponding respectively to said openings (231) in said containers (2) engaging respectively said engaging grooves (18) in a first row of the array;
said outlet unit in said bottom plate (13) of said main frame (1) includes a number (N) of outlet holes (17) aligned respectively with said inlet holes (16) of said inlet unit in said top plate (12), and corresponding respectively to said through holes (211) in said containers (2) engaging respectively said engaging grooves (18) in an M^{th} row of the array; and
said through holes (211) in said containers (2), which engage respectively said engaging grooves in an i^{th} row of the array, correspond respectively to said openings (231) in said containers (2), which engage respectively said engaging grooves (18) in an (i+1)^{th} row of the array, where 1 ≤ i ≤ M-1.

10. The modular plant growing device (100) as claimed in Claim 9, further **characterized in that** said looped flange (42) of each said pot-mounting seats (4) is formed with a transverse notch (421),
said modular plant growing device (100) further **characterized by** a number (M) of resilient fastening strings (5) each having opposite ends fixed respectively to said lateral plates (14) of said main frame (1) and received in said transverse notches (421) in said looped flanges (42) of a number (N) of said pot-mounting seats (4) mounted respectively to said containers (2) that engage respectively said engaging grooves (18) in a corresponding row of the array, thereby anchoring said pot-mounting seats (4) to said main frame (1).

11. The modular plant growing device (100) as claimed in Claim 1, further **characterized by** a hanging unit provided on said main frame (1) and the supporting surface (200) for anchoring detachably said main frame (1) to the supporting surface (200).

12. The modular plant growing device (100) as claimed in Claim 11, further **characterized in that** said hanging unit includes:
a pair of elongate first connecting members (6) extending in a longitudinal direction (A) and mounted fixedly on said outer surface (114) of said rear plate (1) of said main frame (1), each of said first connecting members (6) having at least one inverted L-shaped hook (61); and
at least one second connecting member (7) extending in a transverse direction (B) transverse to the longitudinal direction (A), adapted to be mounted fixedly on the supporting surface (200), and having two hanging rings (71) engaging releasably and respectively said inverted L-shaped hooks (61) of said first connecting members (6).

13. The modular plant growing device (100) as claimed in Claim 12, further **characterized in that** each of said first connecting members (6) has an upper end formed with a positioning groove (63), and a lower end formed with a downwardly extending positioning protrusion (64).

14. The modular plant growing device (100) as claimed in Claim 12, further **characterized in that** each of said first connecting members (6) has opposite lateral sides (60), and two lugs (62) disposed adjacent to said upper end, and extending respectively and rearwardly from said lateral sides (60), each of said lugs (62) of said first connecting members (6) being formed with a through hole (621) adapted for permitting extension of a tool therethrough for use in moving said main frame away from the supporting surface (200).
